# EUROPEAN PATENT APPLICATION

(11) **EP 4 365 774 A1**
(43) Date of publication of application: **08.05.2024**
(21) Application number: 22836674.6
(22) Date of filing: 13.06.2022
(51) Int. Cl.: G06N 3/04, G06T 7/30, G06T 5/00

(54) **MICROSCOPE-BASED SUPER-RESOLUTION METHOD AND APPARATUS, DEVICE AND MEDIUM**

(30) Priority: 05.07.2021 CN 202110758195
(71) Applicant: Tencent Technology (Shenzhen) Company Limited, Shenzhen, Guangdong 518057 (CN)
(72) Inventor: CAI, De, Shenzhen, Guangdong 518057 (CN); HAN, Xiao, Shenzhen, Guangdong 518057 (CN)
(74) Representative: EP&C
(86) International application number: PCT/CN2022/098411
(87) International publication number: WO 2023/279920

(57) **Abstract**

The present disclosure discloses a microscope-based super-resolution method and apparatus, device and medium, and relates to the field of image processing. The method includes: acquiring an input image and at least one auxiliary image, an overlap area existing between a display area of the auxiliary image and a target area in the input image, and the input image and the auxiliary image being both images of a first resolution degree (302); registering the input image and the auxiliary image to obtain a registered image (304); acquiring a high-resolution feature based on the registered image, the high-resolution feature configured to represent image feature of a second resolution degree in the target area (306); and reconstructing the high-resolution feature to obtain a target image of the second resolution degree (308). The above-mentioned method is used for processing a microscope image sequence to acquire and reconstruct a high-resolution image good in effect.

## Description

### RELATED APPLICATION

This application claims priority to China Patent Application No. 202110758195.6, filed on July 05, 2021 and entitled "MICROSCOPE-BASED SUPER-RESOLUTION METHOD AND APPARATUS, DEVICE, AND MEDIUM".

### FIELD OF THE TECHNOLOGY

This application relates to the field of image processing, in particular to a microscope-based super-resolution method and apparatus, device and medium.

### BACKGROUND OF THE DISCLOSURE

Super-resolution is a common method when processing microscope images. Super-resolution refers to improving the resolution of an original image in a method of hardware or software, for example, in the field of the medical technology, a corresponding high-resolution microscope image is recovered from a low-resolution microscope image.

The related art is realized through a super-resolution model, where the super-resolution model includes modules of feature extracting, non-linear mapping, reconstructing, etc., and a technician would train the super-resolution model through low-resolution microscope images and high-resolution microscope images in pairs in advance, and a low-resolution microscope image would be input and a corresponding high-resolution microscope image would be output when the super-resolution model is used.

Only the correspondence between a single low-resolution microscope image and a single high-resolution microscope image is considered in the related art, the obtained high-resolution microscope image has poor quality and relatively accurate image details cannot be obtained.

### SUMMARY

Embodiments of this application provide a microscope-based super-resolution method and apparatus, device and medium. The method is used for acquiring a high-resolution microscope image good in effect. The technical solutions are as follows:
according to one aspect of this application, a microscope-based super-resolution method being provided, the method being executed by a computer device, and the method including:
acquiring an input image and at least one auxiliary image, the input image including a target area, an overlap area existing between a display area of the auxiliary image and the target area, and the input image and the auxiliary image being both microscope images of a first resolution degree;
performing image registration on the input image and the auxiliary image to obtain a registered image;
acquiring high-resolution feature from the registered image, the high-resolution feature configured to represent image feature of a second resolution degree in the target area, and the second resolution degree being greater than the first resolution degree; and
reconstructing the high-resolution feature to obtain a target image of the second resolution degree;
according to one aspect of this application, a microscope-based super-resolution apparatus being provided, the apparatus including:
   a first acquiring unit, configured to acquire an input image and at least one auxiliary image, the input image including a target area, an overlap area existing between a display area of the auxiliary image and the target area, and the input image and the auxiliary image being both microscope images of a first resolution degree;
   a registering unit, configured to perform image registration on the input image and the auxiliary image to obtain a registered image;
   a second acquiring unit, configured to acquire high-resolution feature from the registered image, the high-resolution feature configured to represent image feature of a second resolution degree in the target area, and the second resolution degree being greater than the first resolution degree; and
   a reconstructing unit, configured to reconstruct the high-resolution feature to obtain a target image of the second resolution degree;
   according to another aspect of this application, a computer device being provided, the computer device including: a processor and a memory, at least one instruction, at least one program, and a code set or an instruction set being stored in the memory, and the at least one instruction, the at least one program, and the code set or the instruction set being loaded and executed by the processor to enable the computer device to implement the microscope-based super-resolution method as described above;
   according to another aspect of this application, a computer storage medium being provided, at least one computer program being stored in a computer-readable storage medium, and the computer program being loaded and executed by a processor to enable a computer to implement the microscope-based super-resolution method as described above;
   according to another aspect of this application, a computer program product or computer program being provided, the computer program product or computer program including computer instructions, and the computer instruction being stored in a computer-readable storage medium. The processor of the computer device reads the computer instruction from the computer-readable storage medium, and the processor executes the computer instruction to enable the computer device to execute the microscope-based super-resolution method as described above.

The input image is performed image registration by the auxiliary image, the high-resolution feature is acquired from the registered image, and then, the image with the higher resolution is reconstructed according to the high-resolution feature. This method uses the auxiliary image to register the input image, and adds the image details in the auxiliary image to the input image. The registered image obtained by registration can fuse the image features of the input image and the auxiliary image, and can model and mine the relevance between multiple images, which is beneficial to the subsequent feature extraction and image reconstruction, so as to better reconstruct the higher-resolution image, and make the higher-resolution image have more accurate image details.

### BRIEF DESCRIPTION OF THE DRAWINGS

FIG. 1 is a schematic structural diagram of a computer system according to an exemplary embodiment of this application.
FIG. 2 is a schematic diagram of a microscope-based super-resolution model according to an exemplary embodiment of this application.
FIG. 3 is a schematic flowchart of a microscope-based super-resolution method according to an exemplary embodiment of this application.
FIG. 4 is a schematic diagram of an image registration model according to an exemplary embodiment of this application.
FIG. 5 is a schematic flowchart of an image registration method according to an exemplary embodiment of this application.
FIG. 6 is a schematic diagram of motion compensation according to an exemplary embodiment of this application.
FIG. 7 is a schematic flowchart of a method for training a super-resolution model according to an exemplary embodiment of this application.
FIG. 8 is a schematic flowchart of a microscope-based super-resolution method according to an exemplary embodiment of this application.
FIG. 9 is a schematic diagram of a microscope-based super-resolution method according to an exemplary embodiment of this application.
FIG. 10 is a schematic structural diagram of a microscope-based super-resolution apparatus according to an exemplary embodiment of this application.
FIG. 11 is a schematic structural diagram of a computer device according to an exemplary embodiment of this application.

### DESCRIPTION OF EMBODIMENTS

To make the objectives, technical solutions, and advantages of this application clearer, the following further describes modes of implementation of this application in detail with reference to the accompanying drawings.

First, terms in the embodiments of this application are introduced.

Super-Resolution: the resolution of original images is improved in a method of hardware or software. If the super-resolution is applied to a microscope image, a low-resolution image may be an image of a 10X magnification lens, and an image of a corresponding area of a 20X magnification lens is determined on the basis of the image of the 10X magnification lens.

Optical flow: it refers to represent the motion of an object in a mode of the image brightness. The optical flow expresses the change in an image, and since it contains information of the motion of a target, it can be used by an observer to determine the motion condition of the target.

Motion compensation: it is a method to describe the difference between adjacent frame images, and specifically, how each small block of the previous frame image moves to a certain position in the current frame image.

Image registration: it refers to the process of matching and superimposing two or more images acquired at different times, by different sensors (imaging devices) or under different conditions (weather, illumination, camera position, angle, etc.). For example, the method for image registration includes at least one of an image registration method based on motion estimation and compensation of a displacement stage, and an image registration method based on an image registering module.

As microscopes develop toward digitization, most microscopes are now equipped with image acquisition apparatuses that can acquire digital images in the field of view of an eyepiece in real time for subsequent data storage and analysis. Under the condition of a given multiplying power of an objective lens, the maximum resolution of the microscope is limited by the numerical aperture of the objective lens, i.e., a diffraction limited resolution. At present, there are many methods to break through the diffraction limited resolution, so as to realize the super resolution of the microscope image. By the super-resolution method, a resolution higher than a resolution under an ordinary microscope can be achieved, and information of clearer sample details can be seen, so that the super-resolution method can be better applied to the fields of scientific research, disease diagnosis, etc.

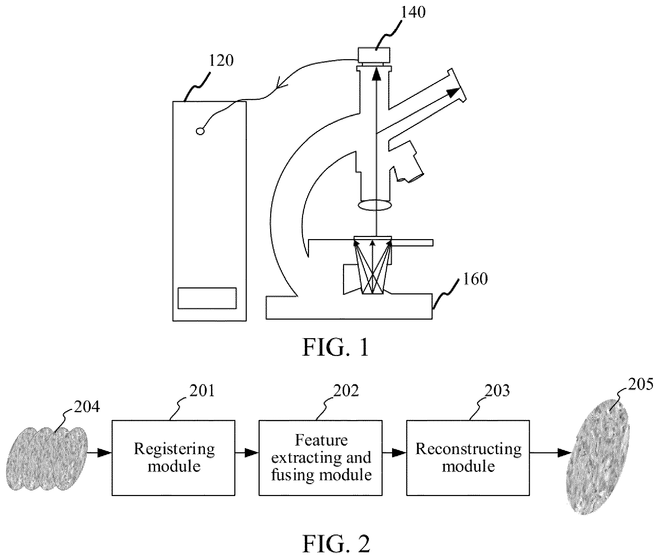

FIG. 1 shows a block diagram of a computer system according to an exemplary embodiment of this application. The computer system includes: a computer device 120, an image acquisition device 140 and a microscope 160.

The computer device 120 runs an application for image processing, the application may be an applet in an application (app), a specialized application, or a web client. The computer device 120 may be at least one of a computer host, a smart phone, a tablet computer, an e-book reader, a moving picture experts group audio layer III (MP3) player, a moving picture experts group audio layer IV (MP4) player, a laptop portable computer, and a desktop computer.

The computer device 120 is connected to the image acquisition device 140 in a wired or wireless manner.

The image acquisition device 140 is configured to acquire a microscope image. The image acquisition device 140 is at least one of a pick-up head, a video camera, a camera, a scanner, a smart phone, a tablet computer, and a laptop portable computer.

The microscope 160 is configured to acquire a magnified image of a sample. The microscope 160 is at least one of an optical microscope and a polarizing microscope.

FIG. 2 shows a schematic diagram of a microscope-based super-resolution model according to an exemplary embodiment of this application. The super-resolution model includes a registering module 201, a feature extracting and fusing module 202 and a reconstructing module 203.

The registering module 201 is configured to perform image registration on an input microscope image sequence, the microscope image sequence 204 is input to the registering module 201, and a registered image is output from the registering module 201. The microscope image sequence 204 includes at least two microscope images arranged in chronological order, and the resolution of the microscope image sequence 204 is a first resolution degree. Optionally, the microscope image sequence 204 includes an input image and auxiliary images, where the input image refers to a to be measured image containing a target area, a display area of the auxiliary image overlaps with the target area, and the overlap may be either full overlap or partial overlap.

The feature extracting and fusing module 202 is configured to extract and fuse high-resolution feature from the registered image, the registered image is input to the feature extracting and fusing module 202, and the high-resolution feature is output from the feature extracting and fusing module 202. The high-resolution feature is configured to represent an image feature of a second resolution degree in the target area, and the second resolution degree is greater than the first resolution degree.

The reconstructing module 203 is configured to reconstruct a higher-resolution image of the target area, the high-resolution feature is input to the reconstructing module 203 and a target image 205 is output from the reconstructing module 203. The target image 205 refers to an image of the second resolution degree corresponding to the target area.

In summary, after the microscope image sequence of the first resolution degree passes through the super-resolution model, the target image of the second resolution degree is obtained, which improves the resolution of the microscope image. In the process of obtaining the target image of the second resolution degree, the input image and the auxiliary image in the microscope image sequence of the first resolution degree are comprehensively considered, which can make full use of the correlation of microscope images corresponding to different positions and model previous and later frame images as a whole, so as to better reconstruct a super-resolution microscopic image. Exemplarily, the previous and later frame image refers to the input image and the auxiliary image.

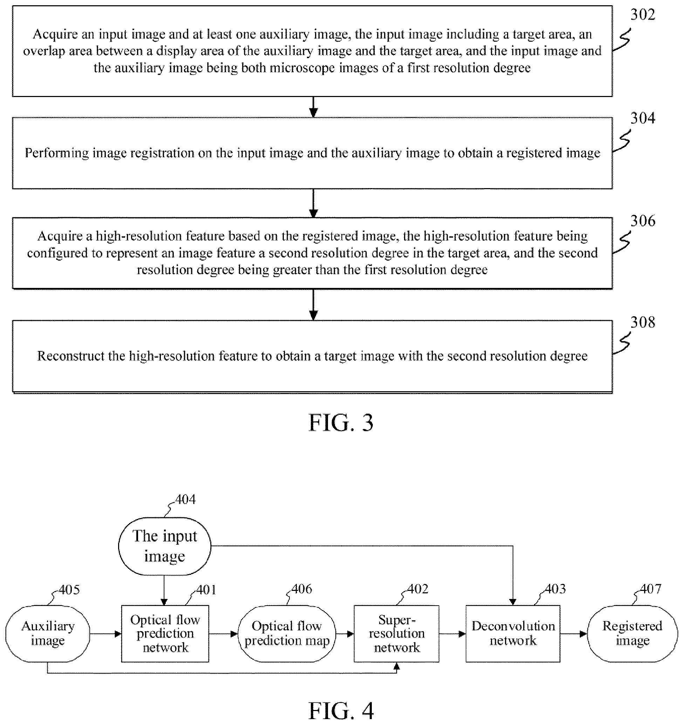

FIG. 3 shows a schematic flowchart of a microscope-based super-resolution method according to an exemplary embodiment of this application. The method may be executed by the computer device 120 as shown in FIG. 1, and the method includes the following steps:
Step 302: Acquire an input image and at least one auxiliary image, the input image including a target area, an overlap area between a display area of the auxiliary image and the target area, and the input image and the auxiliary image being both microscope images of a first resolution degree.

The first resolution degree is set empirically or flexibly adjusted according to the application scenario. Exemplarily, the first resolution degree may refer to the resolution of an image observed under a 10X magnification lens of a microscope, and may also refer to the resolution of an image observed under a 20X magnification lens of a microscope, etc. The microscope image of the first resolution degree is an image obtained by observing a sample under a magnification lens corresponding to the first resolution degree.

The embodiments of this application does not define a method for acquiring the input image and the auxiliary image, as long as it is ensured that both the input image and the auxiliary image are the microscope image of the first resolution degree, and an overlap area exists between the display area of the auxiliary image and the target area contained in the input image. The overlap area indicates an area, in which the display area of the auxiliary image overlaps with the target area, i.e. the "common" area being both a part of the display area of the auxiliary image and a part of the target area. In the embodiments of the present disclosure including the embodiments of both the claims and the specification (hereinafter referred to as "all embodiments of the present disclosure"), the input image and the auxiliary image are selected from a library of the microscope images of the first resolution degree. In all embodiments of the present disclosure, the input image and the auxiliary image are acquired from a microscope image sequence of the first resolution degree. In another exemplary embodiment, the input image is acquired from a microscope image sequence with the first resolution degree sampled within a microscope video, and the auxiliary image is acquired from a historical microscope image library, which includes one or more microscope image with the first resolution degree obtained in the past time period.

The microscope image sequence refers to a sequence containing at least two microscopic images. Optionally, the microscope image sequence is obtained from a microscope video. For example, if the microscope video includes multiple frames of microscope images, the microscope images in the microscope video are arranged in chronological order to obtain the microscope image sequence.

The auxiliary image is used for providing auxiliary information for the process of reconstructing a higher-resolution image, so as to improve the reconstruction quality of the higher-resolution image. The auxiliary image may be either one image or a plurality of images.

The target area refers to an area, with details needing to be magnified, in the sample observed using the microscope, and the target area may be set empirically or flexibly adjusted according to the application scenario, which is not limited by the embodiments of this application. The input image is an image containing the target area in the microscope image sequence. Optionally, the input image containing the target area may mean that the display area of the input image is the same as the target area, or that the display area of the input image is greater than the target area. Exemplarily, the display area of the input image refers to an area, in the observed sample, that the input image represents.

It is to be understood that, the display area of the auxiliary image and the target area may overlap fully or partially. For example, a 60% overlap area exists between the display area of the auxiliary image and the target area.

Optionally, a method for acquiring the input image and at least one auxiliary image includes: determining the input image and images satisfying the correlation condition with the input image in the microscope image sequence of the first resolution degree; and in the images satisfying the correlation condition with the input image, determining an image having an overlap area with the target area and the ratio of the overlap area being greater than a reference value as the auxiliary image.

In all embodiments of the present disclosure, in the microscope image sequence of the first resolution degree, a method for determining the input image includes: determining images containing a target area in the microscope image sequence of the first resolution degree; if the number of the image containing the target area is one, taking the one image as the input image; and if the number of the images containing the target area is multiple, taking any one of the images containing the target area as the input image, or taking one of the multiple images containing the target area that satisfies the selection condition as the input image. Satisfying the selection conditions may be set empirically. Exemplarily, satisfying the selection condition may mean that the target area is located in the display area at a position closest to the center of the display area.

The ratio of the overlap area represents the ratio of the overlap area to the display area, i.e., the ratio of the size of the overlap area to the size of the display area. Satisfying the correlation condition is set empirically. Exemplarily, satisfying the correlation condition may refer to previous images of a first reference number of and later images of a second reference number adjacent to the input image in the microscope image sequence. The first reference number and the second reference number are set empirically, and the first reference number and the second reference number may be the same or different. For example, the first reference number and the second reference number are both 1, or the first reference number and the second reference number are both 2, etc. In all embodiments of the present disclosure, the image satisfying the association condition with the input image may also be referred to as a nearby image of the input image, an image around the input image, etc. Exemplarily, the microscope image sequence includes images 1, 2, 3, 4 and 5 arranged in chronological order, and assuming that the image 3 is the input image, the reference value is 60%, and both the first reference number and the second reference number are 2, in the images 1, 2, 4 and 5 around the image 3, an image having an overlap area with the target area and the ratio of the overlap area up to 60% is determined as the auxiliary image.

Step 304: Perform image registration on the input image and the auxiliary image to obtain a registered image.

Since the overlap area exists between the input image and the auxiliary image, it is necessary to perform image registration on the input image with the auxiliary image, determine the relationship between the input image and the auxiliary image, and supplement image features contained in the input image. The registered image includes the target area.

Optionally, the image registration is the process of transforming different sets of data into one coordinate system. Data may be multiple photographs, data from different sensors, times, depths, or viewpoints. It is used in computer vision, medical imaging, military automatic target recognition, and compiling and analyzing images and data from satellites. Registration is necessary in order to be able to compare or integrate the data obtained from these different measurements. For example, the different sets of data include the input image and the auxiliary image obtained from the microscope images, and the input image and the auxiliary image are performed image registration to obtain a registered image in at least one of an image registration method based on motion estimation and compensation of a displacement stage, and an image registration method based on an image registering module.

Step 306: Acquire a high-resolution feature based on the registered image, the high-resolution feature being configured to represent an image feature a second resolution degree in the target area, and the second resolution degree being greater than the first resolution degree.

Since the registered image is obtained by performing image registration on the input image of the first resolution degree with the auxiliary image without other processing, the resolution of the registered image is the first resolution degree. In the embodiments of the present disclosure including the embodiments of both the claims and the specification, the high-resolution feature can be acquired by the following means: extracting the high-resolution feature from the registered image.

Optionally, the high-resolution feature is extracted from the registered image by a neural network structure, exemplarily, the network structure includes at least one of a neural network structure based on four-dimensional (4D) image data (red green blue (RGB) image three dimensions + time dimension), or a neural network structure based on long and short range memory modules.

Optionally, low-resolution feature is extracted from the registered image, the low-resolution feature configured to represent image feature of the first resolution degree in the target area; the low-resolution feature is mapped to obtain the high-resolution feature. Exemplarily, the low-resolution feature is f2 x f2, and non-linear mapping is performed on the low-resolution feature to obtain a high-resolution feature f3 x f3. Exemplarily, the dimension of the low-resolution feature is less than the dimension of the high-resolution feature, i.e., f2 is less than f3.

Optionally, the registered image and the auxiliary image are fused to obtain a fused image; the high-resolution feature is extracted from the fused image. Exemplarily, the fusion of the registered image and the auxiliary image may refer to either full fusion or partial fusion. For example, overlap areas of the registered image and the auxiliary image are fused to obtain a fused image, or full display areas of the registered image and the auxiliary image are fused to obtain a fused image. Regarding to the overlapping region in the registration image and the auxiliary image, image details respectively possessed in the overlapping region can be used to complete content supplementation, so as to realize image fusion.

In a practical application scenario, the microscope image sequence is obtained according to a real-time microscope video, and the observed sample in the microscope video is in a moving state; therefore, in order to meet the requirements of a user for real-time observation of a sample, the observed target area also changes in real time, and thus the input image will also change accordingly. For example, at time t, the input image is an image regarding an area a; however, at time t+1, the input image is an image regarding an area b. Optionally, a first registered image and a second registered image are fused to obtain a fused registered image; the high-resolution feature is extracted from the fused registered image. The first registered image and the second registered image are registered images with an overlap area, and the first registered image or the second registered image is the registered image obtained in step 304. Further, the fusion of the first registered image with the second registered image may be either full fusion or partial fusion. For example, overlap areas of the first registered image and the second registered image are fused to obtain a fused registered image, or all display area of the first registered image and the second registered image are fused to obtain a fused registered image.

Step 308: Reconstruct the high-resolution feature to obtain a target image with the second resolution degree.

Image reconstruction is used for restoring the target image of the second resolution degree of the target area by using the high-resolution feature. The target image is an image corresponding to the input image, and the target image also includes the target area.

Optionally, the high-resolution feature are reconstructed by a neural network structure, where the network structure includes at least one of a neural network structure based on 4D image data (RGB image three dimensions + time dimension) or a neural network structure based on long and short range memory modules.

Optionally, the high-resolution feature are converted into pixel values of pixel points in the target image through an image reconstruction network; the target image of the second resolution degree corresponding to the input image is obtained through the pixel value of the pixel point.

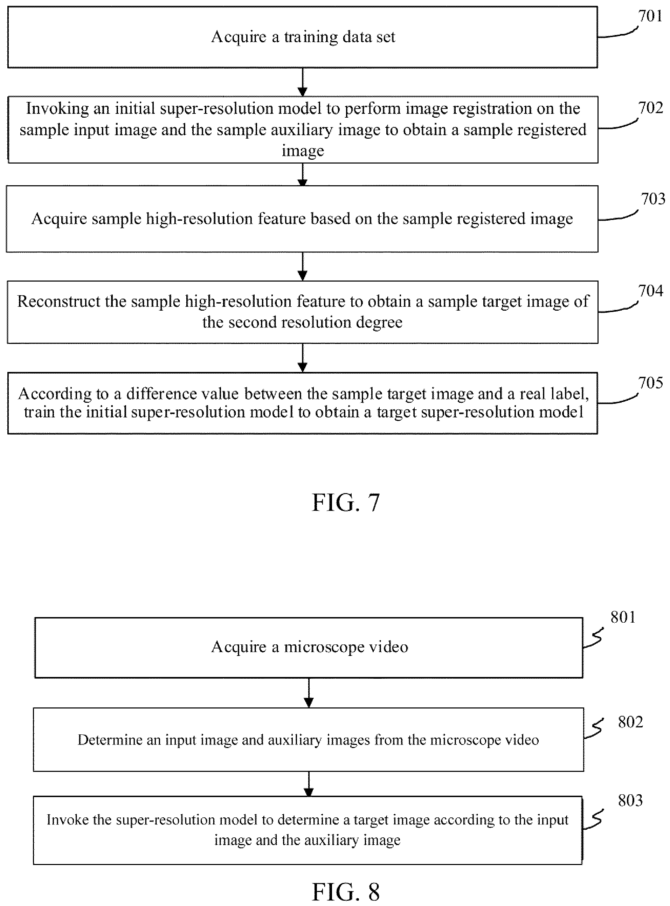

In all embodiments of the present disclosure, the above-mentioned steps 304, 306 and 308 can be realized by invoking a target super-resolution model, that is to say, the target super-resolution model is invoked to perform image registration on the input image and the auxiliary image so as to obtain a registered image. The target super-resolution model is invoked to extract the high-resolution feature from the registered image; and the target super-resolution model is invoked to reconstruct the high-resolution feature to obtain a target image of the second resolution degree. The target super-resolution model is a model capable of reconstructing an image of the second resolution degree on the basis of the input image of the first resolution degree and the auxiliary image, where the target super-resolution model is obtained by training, and the process of obtaining the target super-resolution model by training is described in detail in the embodiment as shown in FIG. 7, and will not be described in detail here.

In all embodiments of the present disclosure, the target super-resolution model includes a target registering module, a target feature extracting and fusing module and a target reconstructing module, and the above-mentioned steps 304, 306 and 308 can be realized by respectively invoking the target registering module, the target feature extracting and fusing module and the target reconstructing module in the target super-resolution model. That is, the target registering module is invoked to perform image registration on the input image and the auxiliary image to obtain the registered image; the target feature extracting and fusing module is invoked to extract the high-resolution feature from the registered image; the target reconstructing module is invoked to reconstruct the high-resolution feature to obtain the target image of the second resolution degree corresponding to the input image.

In summary, in this embodiment, the input image is performed image registration on by the auxiliary image, the high-resolution feature is extracted from the registered image, and then, the image with the higher resolution is reconstructed according to the high-resolution feature. This method uses the auxiliary image to perform image registration on the input image, and adds the image details in the auxiliary image to the input image. The registered image obtained by registration can fuse the image features of the input image and the auxiliary image, and can model and mine the relevance between multiple images, which is beneficial to the subsequent feature extraction and image reconstruction, so as to better reconstruct the higher-resolution image, and make the higher-resolution image have more accurate image details.

In the following embodiment, an exemplary image registration method is provided, which can realize the registration between the input image and the auxiliary image, establish the relevance between the input image and the auxiliary image, and facilitate the subsequent processing flow of the image.

FIG. 4 shows a schematic diagram of an image registration model according to an exemplary embodiment of this application. The image registration model includes an optical flow prediction network 401, a super-resolution network 402 and a deconvolution network 403. Exemplarily, the image registration model may be a registering module 201 in the super-resolution model as shown in FIG. 2.

The optical flow prediction network 401 is configured to determine an optical flow prediction map of the input image and the auxiliary image, the optical flow prediction map configured to predict an optical flow change between the input image and the auxiliary image. An input image 404 and an auxiliary image 405 are input to the optical flow prediction network 401, and an optical flow prediction map 406 is output from the optical flow prediction network 401.

The super-resolution network 402 is configured to perform motion compensation on the optical flow prediction map to obtain a compensated image. The optical flow prediction map 406 and the auxiliary image 405 are input to the super-resolution network 402, and the compensated image with motion compensation is output from the super-resolution network 402.

The deconvolution network 403 is configured to encode and decode the compensated image to obtain a registered image. The compensated image and the input image 404 are input to the deconvolution network 403, and a registered image 407 is output from the deconvolution network 403.

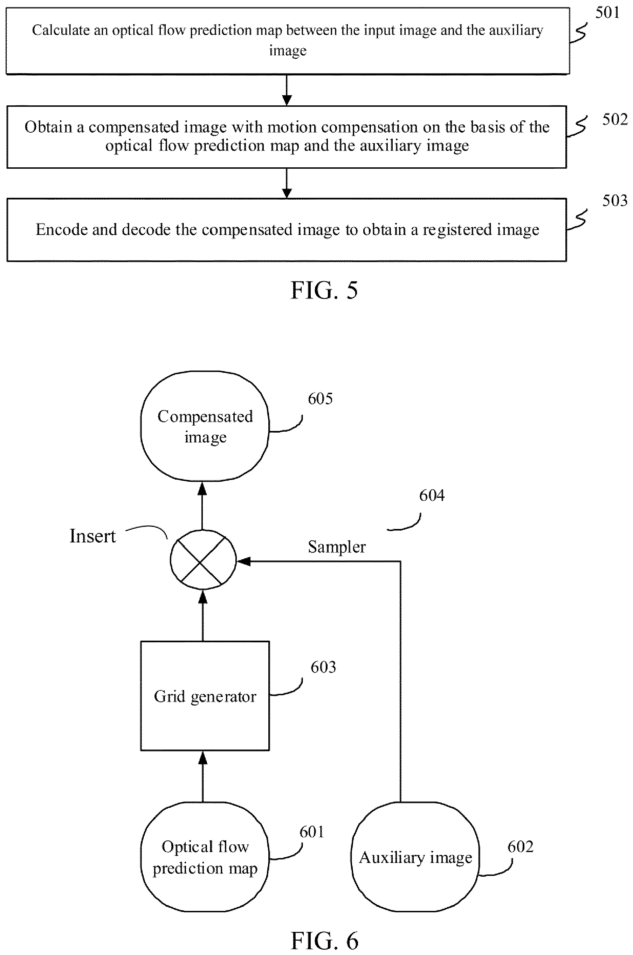

FIG. 5 shows a schematic flowchart of an image registration method according to an exemplary embodiment of this application. The method may be executed by the computer device 120 as shown in FIG. 1, and the method includes the following steps:
Step 501: Calculate an optical flow prediction map between the input image and the auxiliary image.

The optical flow prediction map is used for predicting an optical flow change between the input image and the auxiliary image. Since the input image and the auxiliary image are images acquired at different times, there is a difference between the input image and the auxiliary image in optical flow information, and the optical flow can also denote the change of an image or the movement of an area.

Optionally, the step includes the following sub-steps: invoking an optical flow prediction network to calculate an optical flow prediction map according to a to-be-measured optical flow field of the input image and an auxiliary optical flow field of the auxiliary image.

In all embodiments of the present disclosure, assuming that the input image is an ith-frame image in the microscope image sequence, and the auxiliary image is a jth-frame image in the microscope image sequence, li is used for denoting the to-be-measured optical flow field of the input image, and Ij denotes the auxiliary optical flow field of the auxiliary image, so that the optical flow prediction map Fi —> j (hi → j, vi → j) = ME (Ii, Ij; θ_{ME}), where hi → j and vi → j are the horizontal component and the vertical component of the optical flow prediction map Fi → j, ME () is a function for calculating the optical flow, and θ_{ME} is a function parameter. i and j are positive integers.

Step 502: Obtain the compensated image with motion compensation on the basis of the optical flow prediction map and the auxiliary image.

Optionally, the step includes the following sub-steps:
1: invoking a super-resolution network to up-sample the optical flow prediction map to obtain an up-sampled map.

The up-sampled map is a grid map obtained by up-sampling the optical flow prediction map.

In all embodiments of the present disclosure, as shown in FIG. 6, the up-sampled map is obtained by up-sampling an optical flow prediction map 601 by a grid generator 603. The size of the up-sampled map is greater than the size of the optical flow prediction map, for example, the size of the optical flow prediction map is 4 x 4, and the size of the up-sampled map may be 16 × 16.

Optionally, the super-resolution network is a sub-pixel motion compensation (SPMC) network. The super-resolution network may also be another network for implementing motion compensation, which is not limited herein.

2: Performing interpolation on the up-sampled map by the auxiliary image to obtain the compensated image with motion compensation.

Since the size of the up-sampled map is greater than the size of the optical flow prediction map, the up-sampled map is incomplete, and some grids in the up-sampled map are not numbered, so it is necessary to perfect the up-sampled map by interpolation. Exemplarily, the interpolation may be linear interpolation, bilinear interpolation, or the like.

Exemplarily, as shown in FIG. 6, an auxiliary image 602 is sampled by a sampler 604 to obtain a sampling result; the sampling result is inserted into the up-sampled map to obtain a compensated image 605 with motion compensation.

Step 503: Encode and decode the compensated image to obtain a registered image.

Optionally, the step includes the following sub-steps:
1: invoking a deconvolution network to encode and decode the compensated image to obtain an image residual.

Since the size of the compensated image is consistent with the size of the up-sampled map after up-sampling, the compensated image needs to be down-sampled to restore the size of the compensated image.

Optionally, the deconvolution network may be an encoder-decoder network, that is, the registered image is obtained by encoding and decoding the compensated image through the encoder-decoder network.

Optionally, the encoder-decoder network includes an encoder, a long short-term memory (LSTM) artificial neural network and a decoder.

2: Fusing the image residual with the input image to obtain the registered image.

Optionally, a sum or other operation is performed on the image residual and pixel points in the input image to obtain the registered image.

Optionally, the input image is connected to the deconvolution network through Skip Connections.

In summary, this embodiment performs image registration on the input image via the auxiliary image to obtain the registered image, and since the registered image has fused the image features of the input image and the auxiliary image, and the relevance between multiple images can be obtained from the registered image by modeling and mining, which facilitates subsequent feature extraction and image reconstruction. The input image and the auxiliary image can be considered as continuous frame video images corresponding to different displacement positions, and this embodiment can make full use of the correlation between the continuous frame video images corresponding to different displacement positions and model the previous and later frame images as a whole, so as to facilitate better reconstruction of a super-resolution microscopic image.

In the following embodiment, a method for training a super-resolution model is provided. This embodiment enables the super-resolution model to store the resolution-enhanced image on a computer for subsequent processing or to project the same into the field of view of an eyepiece via the virtual reality technology, thereby realizing a super-resolution microscope.

FIG. 7 shows a schematic flowchart of a method for training a super-resolution model according to an exemplary embodiment of this application. The method may be executed by the computer device 120 as shown in FIG. 1 or other computer devices, and the method includes the following steps:
Step 701: Acquire a training data set.

The training data set includes a sample input image of a first resolution degree and at least one sample auxiliary image, and a real label of a second resolution degree. The real label corresponds to at least two sample images, where the at least two sample images include one sample input image and at least one sample auxiliary image.

In all embodiments of the present disclosure, the sample input image and the sample auxiliary image are determined from a first sample image sequence, and the resolutions of images in the first sample image sequence are all the first resolution degree; the real label is determined from a second sample image sequence, and the resolutions of images in the second sample image sequence are all the second resolution degree.

Optionally, a method for determining the training data set is provided: an ith-frame image in the second sample image sequence is taken as the real label, and according to a display area of the real label, 2n + 1 images having an overlap area with the display area of the real label are determined from the first sample image sequence, where i and n are positive integers; the sample input image and the sample auxiliary image are determined on the basis of the images having the overlap area. Exemplarily, the 2n + 1 images having the overlap area refer to sample images corresponding to the real label, and the sample images include one sample input image and 2n sample auxiliary images.

In all embodiments of the present disclosure, a method for determining the sample input image and the sample auxiliary image on the basis of the image having the overlap area includes: taking the image having the greatest ratio of the overlap area in the images having the overlap area as the sample input image, and taking the other images as the sample auxiliary images. The ratio of the overlap area refers to the ratio of the size of the overlap area to the size of a display area of the image. Exemplarily, the images having the overlap area are 2n + 1 images sequentially arranged in the first sample image sequence, then the image arranged in the middle position in the 2n + 1 images can be taken as the sample input image, and the other images can be taken as the sample auxiliary images.

In all embodiments of the present disclosure, the first sample image sequence acquired at a low magnification lens of a microscope is assumed as*Iⱼ* ∈ *R*^{*H*×*W*×3}, and the corresponding second sample image sequence is assumed as*Iᵢ*' ∈ *R*^{*sH*×*sW*×3}*,* where s denotes the magnification factor, H denotes the length of the image, W denotes the width of the image, i and j denote the number of frames of the image, and i and j are both positive integers. Then, the number of frames j of*Iⱼ*corresponding to*Iᵢ'*belongs to an interval [i-n, i+n], where n is a positive integer, and 2n + 1 frames of images exist in total. If a super-resolution of 10X to 20X is taken as an example, it is necessary to firstly collect continuous frame data of a sample under 10X and 20X of a microscope, and for a certain frame image of 20X, 2n + 1 frames of low-magnification images which coincide with the high-magnification image are selected. In this way, 2n + 1 frames of low-magnification images corresponding to each frame of high-magnification image can be obtained, thereby constituting the training data set for training the super-resolution model. In the 2n + 1 frames of low-magnification images corresponding to each frame of high-magnification image, one sample input image and 2n sample auxiliary images exist. Exemplarily, the high-magnification image refers to a higher-resolution image relative to the low-magnification image, and the low-magnification image refers to a lower-resolution image relative to the high-magnification image.

Step 702: Invoking an initial super-resolution model to perform image registration on the sample input image and the sample auxiliary image to obtain a sample registered image.

Since the sample input image and the sample auxiliary image both have an overlap area with the display area of the real label, it is very likely that an overlap area exists between the sample input image and the sample auxiliary image, it is necessary to register the sample input image with the sample auxiliary image, determine the relationship between the sample input image and the sample auxiliary image, and supplement image features contained in the sample input image. The registered image includes a sample target area.

Optionally, the sample input image and the sample auxiliary image are performed image registration in at least one of an image registration method based on motion estimation and compensation of a displacement stage, and an image registration method based on an image registering module.

In all embodiments of the present disclosure, the initial super-resolution model includes an initial registering module, and the implementation process of step 702 includes: invoking the initial registering module in the initial super-resolution model to perform image registration on the sample input image and the sample auxiliary image to obtain the sample registered image.

Step 703: Acquire sample high-resolution feature based on the sample registered image.

In the embodiments of the present disclosure including the embodiments of both the claims and the specification, the high-resolution feature can be acquired by the following means: extracting the high-resolution feature from the registered image. The high-resolution feature is extracted from the sample registered image by a neural network structure, exemplarily, the network structure includes at least one of a neural network structure based on 4D image data (RGB image three dimensions + time dimension) or a neural network structure based on long and short range memory modules.

Optionally, sample low-resolution feature is extracted from the sample registered image, the sample low-resolution feature configured to represent image feature of the first resolution degree in the target area; the sample low-resolution feature is mapped to obtain the sample high-resolution feature.

Optionally, the sample registered image and the sample auxiliary image are fused to obtain a sample fused image; the sample high-resolution feature is extracted from the sample fused image.

In all embodiments of the present disclosure, the initial super-resolution model includes an initial feature extracting and fusing module, and the implementation process of step 703 includes: invoking the initial feature extracting and fusing module in the initial super-resolution model to extract the sample high-resolution feature from the sample registered image.

In a practical application scenario, the microscope image sequence is obtained according to a real-time microscope video, and the observed sample in the microscope video is in a moving state; therefore, in order to meet the requirements of a user for real-time observation of a sample, the observed target area also changes in real time, and thus the input image will also change accordingly. For example, at time t, the input image is an image regarding an area a; however, at time t+1, the input image is an image regarding an area b. Optionally, a first sample registered image and a second sample registered image are fused to obtain a sample fused registered image; the sample high-resolution feature is extracted from the sample fused registered image. The first sample registered image and the second sample registered image are sample registered images having an overlap area, and the first sample registered image or the second sample registered image is the sample registered image obtained in step 702. Exemplarily, the fusion of the first sample registered image with the second sample registered image may be either full fusion or partial fusion. For example, overlap areas of the first sample registered image and the second sample registered image are fused to obtain a sample fused registered image, or all display area of the first sample registered image and the second sample registered image are fused to obtain a sample fused registered image.

Step 704: Reconstruct the sample high-resolution feature to obtain a sample target image of the second resolution degree.

Image reconstruction is used for restoring the sample target image of the second resolution degree of the sample target area. The sample target image is an image corresponding to the sample input image, and the sample target image also includes the sample target area.

Optionally, the sample high-resolution feature is reconstructed by a neural network structure, exemplarily, the network structure includes at least one of a neural network structure based on 4D image data (RGB image three dimensions + time dimension) or a neural network structure based on long and short range memory modules.

Optionally, the sample high-resolution feature is converted into pixel values of pixel points in the sample target image through an image reconstruction network; The sample target image of the second resolution degree corresponding to the sample input image is obtained through the pixel value of the pixel point.

In all embodiments of the present disclosure, the initial super-resolution model includes an initial reconstructing module, and the implementation process of step 704 includes: invoking the initial reconstructing module in the initial super-resolution model to reconstruct the sample high-resolution feature to obtain the sample target image of the second resolution degree.

Step 705: Train the initial super-resolution model to obtain the target super-resolution model according to a difference value between the sample target image and the real label.

Optionally, according to the difference value between the sample target image and the real label, the initial super-resolution model is trained by an error back-propagation algorithm.

Optionally, a loss function is set, and the difference value between the sample target image and the real label is substituted into the loss function to obtain a loss difference value; the initial super-resolution model is trained according to the loss difference value.

In all embodiments of the present disclosure, the initial super-resolution model includes an initial registering module, an initial feature extracting and fusing module, and an initial reconstructing module, and training the initial super-resolution model refers to training the initial registering module, the initial feature extracting and fusing module and the initial reconstructing module.

In all embodiments of the present disclosure, the process of training the initial super-resolution model is an iterative process, and when training is performed once, whether the current training process satisfies a training termination condition or not is determined once. If the current training process satisfies the training termination condition, the super-resolution model obtained by current training is taken the target super-resolution model; if the current training process does not satisfy the training termination condition, training the super-resolution model obtained by current training continues until the training process satisfies the training termination condition, and the super-resolution model obtained when the training process satisfies the training termination condition is taken as the target super-resolution model.

In summary, this embodiment provides a method for training the super-resolution model, where during training, the method performs training according to a plurality of sample input images of a first resolution degree and sample auxiliary images and the real label of a second resolution degree, so as to ensure that a qualified super-resolution model can be obtained. The sample input image and the sample auxiliary image can be considered as continuous frame video images corresponding to different displacement positions in the first sample image sequence, and this training method can make full use of the correlation between the continuous frame video images corresponding to different displacement positions and model the previous and later frame images as a whole, so as to facilitate training the super-resolution model capable of reconstructing a super-resolution microscopic image better.

FIG. 8 shows a schematic flowchart of a microscope-based super-resolution method according to an exemplary embodiment of this application. The method may be executed by the computer device 120 as shown in FIG. 1 or other computer devices, and the method includes the following steps:
Step 801: Acquire a microscope video.

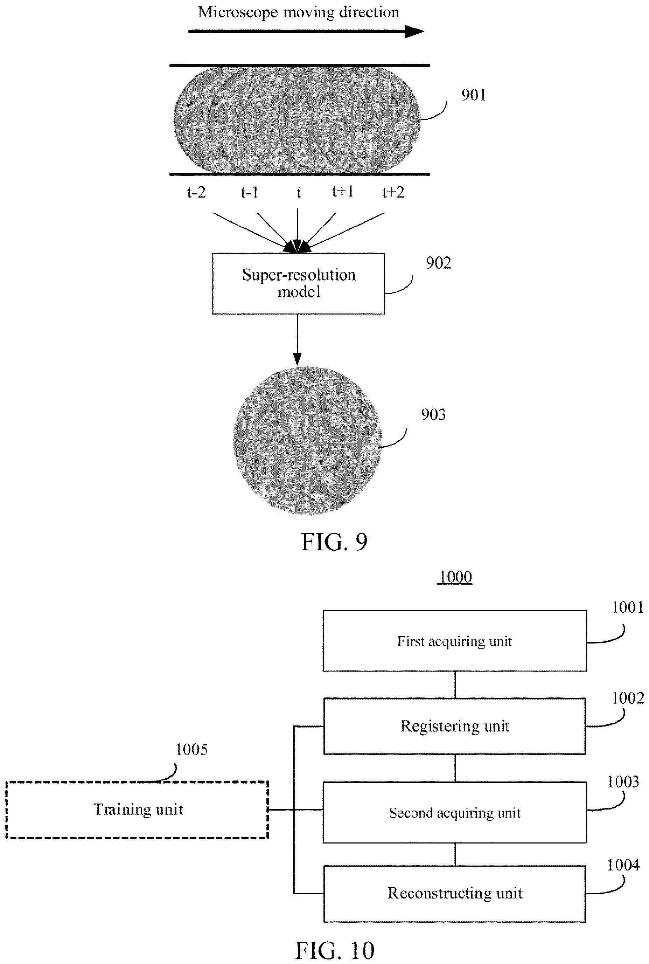

The microscope video is a video of a first resolution degree under a microscope acquired by an image acquisition device. Exemplarily, a sample on the microscope is moved, and the microscope video is acquired through the image acquisition device, the structure is as shown in FIG. 9, and the sample is moved according to the microscope movement direction, so as to obtain a microscope video 901.

The resolution of the microscope video is a first resolution degree, where the first resolution degree is at a lower magnification. By taking an optical microscope as an example, the first resolution degree is achieved at a magnification of 10X.

Step 802: Determine an input image and auxiliary images from the microscope video.

The input image is an image at any time in the microscope video. Exemplarily, as shown in FIG. 9, the image at time t in the microscope video 901 is determined as the input image.

The auxiliary image is an image in the microscope video that has an overlap area with the input image. Exemplarily, as shown in FIG. 9, images at time t-2, time t -1, time t + 1, and time t + 2 in the microscope video 901 are determined as the auxiliary images.

Step 803: Invoke the super-resolution model to determine a target image according to the input image and the auxiliary image.

The super-resolution model is used to improve the resolution of the input image according to the auxiliary image. A specific model structure of the super-resolution model may refer to the embodiment as shown in FIG. 2. Exemplarily, the super-resolution model herein may be the target super-resolution model trained in the embodiment as shown in FIG. 7.

The target image refers to an image of a second resolution degree corresponding to the input image. The target image has the same display area as the input image. The second resolution degree is greater than the first resolution degree, exemplarily, the first resolution degree is achieved at a magnification of 10X and the second resolution degree is achieved at a magnification of 40X by taking an optical microscope as an example.

Optionally, the super-resolution model includes a registering module, a feature extracting and fusing module and a reconstructing module. The registering module is configured to perform image registration on an input microscope image sequence; the feature extracting and fusing module is configured to extract and fuse the high-resolution feature from the registered image; the reconstructing module is configured to reconstruct a higher-resolution image of the target area.

In all embodiments of the present disclosure, as shown in FIG. 9, a super-resolution model 902 is invoked, and the microscope video 901 is substituted into the super-resolution model 902 to obtain a target image 903.

In summary, this embodiment provides an end-to-end super-resolution model, a high-resolution microscope image can be obtained directly only by inputting a microscope video, the field of view of a microscope is greater under a low-magnification lens, and data scanning is faster, so that the method can obtain high-resolution data at a higher speed for subsequent image processing and analysis, such as various auxiliary diagnosis based on the artificial intelligence (AI) technology. It is also possible to take full advantage of the existing hardware resources of conventional microscopes, without requiring additional equipment investment. In addition, the super resolution achieved on the basis of an algorithm does not need to bind with reagent samples, and the corresponding model can be trained and then deployed for application only by acquiring the continuous video of different samples. Exemplarily, the auxiliary diagnosis based on the artificial intelligence (AI) technology includes pathological diagnosis of a pathological section, in this case, the microscope video may be obtained by moving the pathological section and observing the pathological section with a microscope.

The following is an apparatus embodiment of this application. Details that are not described in detail in the apparatus embodiment can refer to the corresponding description in the above-mentioned method embodiment, and will not be repeated herein.

FIG. 10 shows a schematic structural diagram of a microscope-based super-resolution apparatus according to an exemplary embodiment of this application. The apparatus may be implemented as all or a part of a computer device by software, hardware, or a combination of software and hardware, the apparatus 1000 including:
a first acquiring unit 100 1, configured to acquire an input image and at least one auxiliary image, the input image including a target area, an overlap area existing between a display area of the auxiliary image and the target area, and the input image and the auxiliary image being both microscope images of a first resolution degree;
a registering unit 1002, configured to perform image registration on the input image and the auxiliary image to obtain a registered image;
a second acquiring unit 1003, configured to acquire a high-resolution feature based on the registered image, the high-resolution feature configured to represent image feature of a second resolution degree in the target area, and the second resolution degree being greater than the first resolution degree; and
a reconstructing unit 1004, configured to reconstruct the high-resolution feature to obtain a target image of the second resolution degree.

In an optional design of this application, the registering unit 1002 is further configured to calculate an optical flow prediction map between the input image and the auxiliary image, the optical flow prediction map configured to predict an optical flow change between the input image and the auxiliary image; obtain a compensated image with motion compensation on the basis of the optical flow prediction map and the auxiliary image; and encode and decode the compensated image to obtain the registered image.

In an optional design of this application, the registering unit 1002 is further configured to invoke an optical flow prediction network to calculate the optical flow prediction map according to a to-be-measured optical flow field of the input image and an auxiliary optical flow field of the auxiliary image.

In an optional design of this application, the registering unit 1002 is further configured to invoke a super-resolution network to up-sample the optical flow prediction map to obtain an up-sampled map; and perform bilinear interpolation on the up-sampled map by the auxiliary image to obtain the compensated image with motion compensation.

In an optional design of this application, the registering unit 1002 is further configured to invoke a deconvolution network to encode and decode the compensated image to obtain an image residual; and fuse the image residual with the input image to obtain the registered image.

In an optional design of this application, the second acquiring unit 1003 is further configured to extract low-resolution feature from the registered image, the low-resolution feature configured to represent image feature of the first resolution degree in the target area; and map the low-resolution feature to obtain the high-resolution feature.

In an optional design of this application, the second acquiring unit 1003 is further configured to fuse the registered image with an auxiliary image to obtain a fused image; and extract the high-resolution feature from the fused image.

In an optional design of this application, the reconstructing unit 1004 is further configured to convert the high-resolution feature into pixel values of pixel points in the target image through an image reconstruction network; and obtain the target image of the second resolution degree corresponding to the input image through the pixel value of the pixel point.

In an optional design of this application, the first acquiring unit 1001 is further configured to determine the input image and images satisfying the correlation condition with the input image in the microscope image sequence of the first resolution degree; and in the images satisfying the correlation condition with the input image, determine an image having an overlap area with the target area and the ratio of the overlap area being greater than a reference value as the auxiliary image.

In an optional design of this application, the registering unit 1002 is configured to invoke a target super-resolution model to perform image registration on the input image and the auxiliary image to obtain a registered image;
the second acquiring unit 1003 is configured to invoke the target super-resolution model to extract the high-resolution feature from the registered image;
the reconstructing unit 1004 is configured to invoke the target super-resolution model to reconstruct the high-resolution feature to obtain a target image of the second resolution degree corresponding to the input image.

In an optional design of this application, the apparatus further includes: a training unit 1005.

The training unit 1005 is configured to acquire a training data set, the training data set including a sample input image of a first resolution degree and at least one sample auxiliary image, and a real label of a second resolution degree; invoke an initial super-resolution model to perform image registration on the sample input image and the sample auxiliary image to obtain a sample registered image; extract sample high-resolution feature from the sample registered image; reconstruct the sample high-resolution feature to obtain a sample target image of the second resolution degree; and according to a difference value between the sample target image and the real label, train the initial super-resolution model to obtain the target super-resolution model.

In an optional design of this application, the sample input image and the sample auxiliary image are determined from a first sample image sequence, and the resolutions of images in the first sample image sequence are all the first resolution degree; the real label is determined from a second sample image sequence, and the resolutions of images in the second sample image sequence are all the second resolution degree. The training unit 1005 is further configured to take an ith-frame image in the second sample image sequence as the real label, and according to a display area of the real label, determine 2n + 1 images having an overlap area with the display area of the real label from the sample image sequence, i and n being positive integers; and determine the sample input image and the sample auxiliary image on the basis of the images having the overlap area.

In summary, in this embodiment, the input image is performed image registration by the auxiliary image, the high-resolution feature is extracted from the registered image, and then, the image with the higher resolution is reconstructed according to the high-resolution feature. This method uses the auxiliary image to perform image registration on the input image, and adds the image details in the auxiliary image to the input image. The registered image obtained by registration can fuse the image features of the input image and the auxiliary image, and can model and mine the relevance between multiple images, which is beneficial to the subsequent feature extraction and image reconstruction, so as to better reconstruct the higher-resolution image, and make the higher-resolution image have more accurate image details.

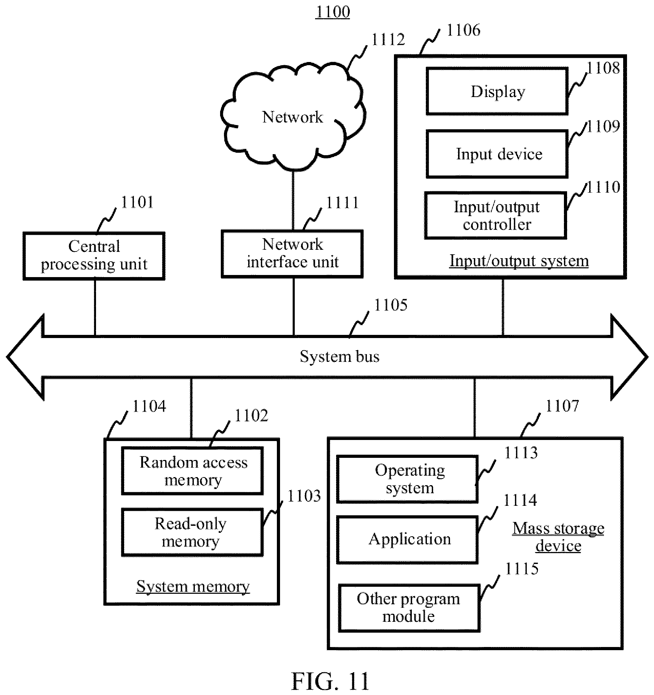

FIG. 11 is a schematic structural diagram of a computer device according to an embodiment of this application. Exemplarily, a computer device 1100 includes a central processing unit (abbreviation: CPU) 1101, a system memory 1104 including a random access memory (abbreviation: RAM) 1102 and a read-only memory (abbreviation: ROM) 1103, and a system bus 1105 connecting the system memory 1104 and the CPU 1101. The computer device 1100 further includes a basic input/output (I/O) system 1106 assisting in transmitting information between components in the computer, and a mass storage device 1107 configured to store an operating system 1113, an application 1114, and another program module 1115.

The I/O system 1106 includes a display 1108 configured to display information and an input device 1109 such as a mouse or a keyboard that is used for inputting information by a user. The display 1108 and the input device 1109 are both connected to the CPU 1101 by using an input/output controller 1110 connected to the system bus 1105. The I/O system 1106 may further include the input/output controller 1110 to be configured to receive and process inputs from a plurality of other devices such as a keyboard, a mouse, and an electronic stylus. Similarly, the input/output controller 1110 further provides an output to a display screen, a printer, or another type of output device.

A mass storage device 1107 is connected to the CPU 1101 by using a mass storage controller (not shown) connected to the system bus 1105. The mass storage device 1107 and a computer-readable medium associated with the large-capacity storage device provide non-volatile storage to the computer device 1100. That is, the mass storage device 1107 may include the computer-readable medium (not shown) such as a hard disk or compact disc read-only memory (abbreviation: CD-ROM) drive.

Generally, the computer-readable medium may include a computer storage medium and a communication medium. The computer storage medium includes volatile and non-volatile media, and removable and non-removable media implemented by using any method or technology used for storing information such as computer-readable instructions, data structures, program modules, or other data. The computer storage medium includes RAM, ROM, an erasable programmable read-only memory (abbreviation: EPROM), an electrically erasable programmable read-only memory (abbreviation: EEPROM), a flash memory or other solid state storage technologies, CD-ROM, a digital versatile disc (abbreviation: DVD) or other optical storages, a magnetic cassette, a magnetic tape, a magnetic disk storage or other magnetic storage devices. Certainly, a person skilled in art can know that the computer storage medium is not limited to the foregoing several types. The system memory 1104 and the mass storage device 1107 may be collectively referred to as a memory.

According to the embodiments of this application, the computer device 1100 may further be connected, through a network such as the Internet, to a remote computer on the network and run. That is, the computer device 1100 may be connected to a network 1112 by using a network interface unit 1111 connected to the system bus 1105, or may be connected to another type of network or a remote computer system (not shown) by using a network interface unit 1111. Exemplarily, the computer device 1100 may be a terminal or may be a server.

According to another aspect of this application, a computer device is further provided, the computer device including: a processor and a memory, at least one instruction, at least one program, and a code set or an instruction set being stored in the memory, and the at least one instruction, the at least one program, and the code set or the instruction set being loaded and executed by the processor to enable the computer device to implement the microscope-based super-resolution method as described above.

According to another aspect of this application, a computer storage medium is further provided, at least one computer program being stored in a computer-readable storage medium, and the computer program being loaded and executed by a processor to enable a computer to implement the microscope-based super-resolution method as described above.

According to another aspect of this application, a computer program product or computer program is further provided, the computer program product or computer program including computer instructions, and the computer instruction being stored in a computer-readable storage medium. The processor of the computer device reads the computer instruction from the computer-readable storage medium, and the processor executes the computer instruction to enable the computer device to execute the microscope-based super-resolution method as described above.

Optionally, this application further provides a computer program product containing instructions that, when running the computer program product on a computer device, cause the computer device to execute the microscope-based super-resolution method as described above in various aspects.

It is to be understood that "a plurality of" mentioned in the description means two or more. "And/or" describes an association relationship for associated objects and represents that three relationships may exist. For example, A and/or B may represent the three cases where only A exists, both A and B exist, and only B exists. The character "/" generally indicates an "or" relationship between the associated objects.

A person of ordinary skill in the art may understand that all or some of the steps of the foregoing embodiments may be implemented by hardware, or may be implemented by a program instructing relevant hardware. The program may be stored in a computer-readable storage medium. The above-mentioned storage medium may be a read-only memory, a magnetic disk, an optical disc, or the like.

The foregoing descriptions are merely optional embodiments of this application, but are not intended to limit this application. Any modification, equivalent replacement, or improvement made within the principle of this application shall fall within the protection scope of this application.

## Claims

1. A microscope-based super-resolution method, the method being executed by a computer device, and the method comprising:
acquiring an input image and at least one auxiliary image, the input image comprising a target area, an overlap area between a display area of the auxiliary image and the target area, and the input image and the auxiliary image being both microscope images of a first resolution degree;
performing image registration on the input image and the auxiliary image to obtain a registered image;
acquiring a high-resolution feature based on the registered image, the high-resolution feature being configured to represent an image feature of a second resolution degree in the target area, and the second resolution degree being greater than the first resolution degree; and
reconstructing the high-resolution feature to obtain a target image with the second resolution degree.

2. The method according to claim 1, wherein the performing image registration on the input image and the auxiliary image to obtain a registered image, comprises:
calculating an optical flow prediction map between the input image and the auxiliary image, the optical flow prediction map configured to predict an optical flow change between the input image and the auxiliary image;
obtaining a compensated image with motion compensation on the basis of the optical flow prediction map and the auxiliary image; and
encoding and decoding the compensated image to obtain the registered image.

3. The method according to claim 2, wherein the calculating an optical flow prediction map between the input image and the auxiliary image, comprises:
invoking an optical flow prediction network to calculate the optical flow prediction map according to a to-be-measured optical flow field of the input image and an auxiliary optical flow field of the auxiliary image.

4. The method according to claim 2, wherein the obtaining a compensated image with motion compensation on the basis of the optical flow prediction map and the auxiliary image, comprises:
invoking a super-resolution network to up-sample the optical flow prediction map to obtain an up-sampled map; and
performing bilinear interpolation on the up-sampled map by the auxiliary image to obtain the compensated image with motion compensation.

5. The method according to claim 2, wherein the encoding and decoding the compensated image to obtain the registered image, comprises:
invoking a deconvolution network to encode and decode the compensated image to obtain an image residual; and
fusing the image residual with the input image to obtain the registered image.

6. The method according to any one of claims 1 to 5, wherein the acquiring a high-resolution feature based on the registered image, comprises:
acquiring a low-resolution feature based on the registered image, the low-resolution feature being configured to represent an image feature of the first resolution degree in the target area; and mapping the low-resolution feature to obtain the high-resolution feature.

7. The method according to any one of claims 1 to 5, wherein the extracting high-resolution features from the registered image, comprises:
fusing the registered image and the auxiliary image to obtain a fused image; and
extracting the high-resolution feature from the fused image.

8. The method according to any one of claims 1 to 5, wherein the reconstructing the high-resolution feature to obtain a target image with the second resolution degree, comprises:
converting the high-resolution feature into pixel values of pixel points in the target image through an image reconstruction network; and
obtaining the target image of the second resolution degree corresponding to the input image through the pixel value of the pixel point.

9. The method according to any one of claims 1 to 5, wherein the acquiring an input image and at least one auxiliary image, comprises:
determining the input image and images satisfying the correlation condition with the input image in a microscope image sequence of the first resolution degree; and
in the images satisfying the correlation condition with the input image, determining an image having an overlap area with the target area and the ratio of the overlap area being greater than a reference value as the auxiliary image.

10. The method according to any one of claims 1 to 5, wherein the performing image registration on the input image and the auxiliary image to obtain a registered image, comprises:
invoking a target super-resolution model to register the input image and the auxiliary image to obtain a registered image;
the acquiring a high-resolution feature based on the registered image, comprises:
invoking the target super-resolution model to extract high-resolution feature from the registered image;
the reconstructing the high-resolution feature to obtain a target image of the second resolution degree, comprises:
invoking the target super-resolution model to reconstruct the high-resolution feature to obtain a target image of the second resolution degree.

11. The method according to claim 10, wherein the method further comprises:
acquiring a training data set, the training data set comprising a sample input image of the first resolution degree and at least one sample auxiliary image, and a real label of the second resolution degree;
invoking an initial super-resolution model to register the sample input image and the sample auxiliary image to obtain a sample registered image; acquiring sample high-resolution feature from the sample registered image; reconstructing the sample high-resolution feature to obtain a sample target image of the second resolution degree; and
according to a difference value between the sample target image and the real label, training the initial super-resolution model to obtain the target super-resolution model.

12. The method according to claim 11, wherein the sample input image and the sample auxiliary image are determined from a first sample image sequence, and the resolutions of images in the first sample image sequence are all the first resolution degree; the real label is determined from a second sample image sequence, and the resolutions of images in the second sample image sequence are all the second resolution degree;
the acquiring a training data set, comprises:
taking an ith-frame image in the second sample image sequence as the real label, and according to a display area of the real label, determining 2n + 1 images having an overlap area with the display area of the real label from the first sample image sequence, i and n being positive integers; and
determining the sample input image and the sample auxiliary image on the basis of the images having the overlap area.

13. A microscope-based super-resolution apparatus, the apparatus comprising:
a first acquiring unit, configured to acquire an input image and at least one auxiliary image, the input image comprising a target area, an overlap area between a display area of the auxiliary image and the target area, and the input image and the auxiliary image being both microscope images of a first resolution degree;
a registering unit, configured to perform image registration on the input image and the auxiliary image to obtain a registered image;
a second acquiring unit, configured to acquiring a high-resolution feature based on the registered image, the high-resolution feature configured to represent image feature of a second resolution degree in the target area, and the second resolution degree being greater than the first resolution degree; and
a reconstructing unit, configured to reconstruct the high-resolution feature to obtain a target image with the second resolution degree.

14. The apparatus according to claim 13, wherein the registering unit is configured to invoke a target super-resolution model to register the input image and the auxiliary image to obtain a registered image;
the second acquiring unit is configured to invoke the target super-resolution model to acquire high-resolution feature from the registered image; and
the reconstructing unit is configured to invoke the target super-resolution model to reconstruct the high-resolution feature to obtain a target image of the second resolution degree.

15. The apparatus according to claim 14, wherein the apparatus further comprises:
a training unit, configured to acquire a training data set, the training data set comprising a sample input image of the first resolution degree and at least one sample auxiliary image, and a real label of the second resolution degree; invoking an initial super-resolution model to perform image registration on the sample input image and the sample auxiliary image to obtain a sample registered image; acquiring sample high-resolution feature from the sample registered image; reconstructing the sample high-resolution feature to obtain a sample target image of the second resolution degree; and according to a difference value between the sample target image and the real label, training the initial super-resolution model to obtain the target super-resolution model.

16. A computer device, the computer device comprising: a processor and a memory, at least one instruction, at least one program, and a code set or an instruction set being stored in the memory, and the at least one instruction, the at least one program, and the code set or the instruction set being loaded and executed by the processor to enable the computer device to implement the microscope-based super-resolution method according to any one of claims 1 to 12.

17. A non-transitory computer-readable storage medium, at least one computer program being stored in the non-transitory computer-readable storage medium, and the computer program being loaded and executed by a processor to enable a computer to implement the microscope-based super-resolution method according to any one of claims 1 to 12.

18. A computer program product, the computer program product comprising computer instructions, and the computer instruction being stored in a computer-readable storage medium, a processor of a computer device reading the computer instruction from the computer-readable storage medium, and the processor executing the computer instruction to enable the computer device to execute the microscope-based super-resolution method according to any one of claims 1 to 12.
